(19) Europäisches Patentamt / European Patent Office / Office européen des brevets

(11) **EP 2 402 662 A1**

(12) **EUROPEAN PATENT APPLICATION**
published in accordance with Art. 153(4) EPC

(43) Date of publication:
**04.01.2012 Bulletin 2012/01**

(21) Application number: **10745959.6**

(22) Date of filing: **23.02.2010**

(51) Int Cl.:
*F24D 3/00* (2006.01)　　*F24D 7/00* (2006.01)
*F24D 17/00* (2006.01)　　*F24F 11/02* (2006.01)
*F25B 1/00* (2006.01)

(86) International application number:
**PCT/JP2010/001185**

(87) International publication number:
**WO 2010/098072 (02.09.2010 Gazette 2010/35)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.02.2009 JP 2009040980**

(71) Applicants:
• **Daikin Industries, Ltd.**
**Osaka-shi, Osaka 530-8323 (JP)**

• **Daikin Europe N.V.**
**8400 Oostende (BE)**

(72) Inventor: **HONDA, Masahiro**
**Oostende 8400 (BE)**

(74) Representative: **HOFFMANN EITLE**
**Patent- und Rechtsanwälte**
**Arabellastraße 4**
**81925 München (DE)**

(54) **HEAT PUMP SYSTEM**

(57) A heat pump system (1) having a variable-capacity circulating pump (43a) for circulating an aqueous medium inside a hot-water circuit of loop form, wherein the refrigerant-side circulation rate in a refrigerant circuit is controlled to bring the temperature of the aqueous medium at the outlet of a usage-side heat exchanger (41 a) to a targeted first target temperature (Twls), and the operating capacity of the circulating pump (43a) is controlled to bring a medium temperature differential (ΔTw) of the aqueous medium between the outlet and the inlet of the usage-side heat exchanger (41a) to a targeted second target temperature differential (ΔTws).

FIG. 1

**Description**

**TECHNICAL FIELD**

The present invention relates to a heat pump system for circulating an aqueous medium.

**BACKGROUND ART**

Hydronic heating devices of a heat pump type like that disclosed in Patent Citation I (Japanese Laid-open Patent Application 2003-314838) are known in the prior art. This hydronic heating device is provided with an outdoor unit of a heat pump type; a water/refrigerant heat exchanger for bringing about heat exchange between a refrigerant and water; an air-warming floor panel or air-warming heat exchanger connected to the water/refrigerant heat exchanger by a hot-water tube; and a circulating pump for circulating hot water through the hot-water tube.

**SUMMARY OF THE INVENTION**

However, a problem with such conventional hydronic heating devices of a heat pump type is that in a case of a decrease in load on the air-warming floor panel or air-warming heat exchanger which warms the room, the outlet/inlet temperature differential of the water/refrigerant heat exchanger becomes smaller, resulting in an excessive temperature rise of the water being supplied to the air-warming floor panel or air-warming heat exchanger, possibly leading to auto-shutoff or poor energy efficiency of the unit, as well as to diminished comfort.
An object of the present invention is to provide a heat pump system that can adapt to changes in operating load and provide comfortable air conditioning.
The heat pump system according to a first aspect of the present invention is provided with a refrigerant circuit, an inlet temperature sensor for measuring a heat exchanger inlet temperature of an aqueous medium in a usage-side heat exchanger; an outlet temperature sensor for measuring a heat exchanger outlet temperature of the aqueous medium in the usage-side heat exchanger; a variable-capacity circulating pump for circulating the aqueous medium inside a hot-water circuit of loop form; and controller. The refrigerant circuit is a circuit in which a compressor, a usage-side heat exchanger for carrying out heat exchange between the refrigerant and the aqueous medium, an expansion valve, and a heat-source-side heat exchanger are connected in loop form. The controller controls a refrigerant-side circulation rate in the refrigerant circuit to bring a temperature of the aqueous medium at the outlet of the usage-side heat exchanger to a targeted first target temperature, and controls an operating capacity of the circulating pump to bring a medium temperature differential of the aqueous medium between the outlet and the inlet of the usage-side heat exchanger to a targeted second target temperature differential.
Specifically, in this heat pump system, as a first control, the refrigerant-side circulation rate in the refrigerant circuit is controlled to bring the temperature of the aqueous medium at the outlet of the usage-side heat exchanger to a targeted first target temperature, controlling the water temperature at the outlet side of the usage-side heat exchanger to maintain it at a predetermined temperature. Also, as a second control, the operating capacity of the circulating pump is controlled to bring the medium temperature differential of the aqueous medium between the outlet and the inlet of the usage-side heat exchanger to a targeted second target temperature differential, controlling the outlet/inlet temperature differential to a predetermined temperature differential. In so doing, excessive temperature fluctuations of the aqueous medium can be reliably prevented, even in cases of decreased load on the usage-side heat exchanger.
The heat pump system according to a second aspect of the present invention is the heat pump system according to the first aspect wherein the controller controls the operating capacity of the pump by carrying out PI control such that the medium temperature differential at a current point in time is brought into approximation with the second target temperature differential.
According to the aspect described above, because temperature control can take place so as to bring the medium temperature differential at a current point in time into approximation with the second target temperature differential and eliminate deviation therebetween through PI control, excessive temperature rise of the aqueous medium can be reliably prevented.
The heat pump system according to a third aspect of the present invention is the heat pump system according to the first or second aspect wherein air-warming of a target space is carried out using hot water produced by condensing the refrigerant in the usage-side heat exchanger.
According to the aspect described above, by using hot water produced by condensing the refrigerant in the usage-side heat exchanger for air-warming of a target space, an excessive rise in the temperature of the aqueous medium can be reliably prevented, even in cases of decreased load on the usage-side heat exchanger in association with higher room temperature in the target space.
The heat pump system according to a fourth aspect of the present invention is the heat pump system according to the third aspect wherein the controller carries out a control to decrease the operating capacity of the pump in a case where the medium temperature differential is smaller than the second target temperature differential, and the temperature of the aqueous medium at the outlet of the usage-side heat exchanger is equal to or greater than the first target temperature, and carries out a control to increase the operating capacity of the pump in a case where the medium temperature differential is greater than the second target temperature differential.

According to the aspect described above, control is carried out to decrease the operating capacity of the pump in a case where the medium temperature differential is smaller than the second target temperature differential, and moreover the temperature of the aqueous medium at the outlet of the usage-side heat exchanger is equal to or greater than the first target temperature, while control is carried out to increase the operating capacity of the pump in a case where the medium temperature differential is greater than the second target temperature differential; whereby in a case where the medium temperature differential is smaller than the second target temperature differential, and the temperature of the aqueous medium at the outlet of the usage-side heat exchanger is equal to or greater than the first target temperature, it can be decided that the load on the usage-side heat exchanger has decreased, and excessive temperature rise of the aqueous medium can be reliably prevented.

The heat pump system according to a fifth aspect of the present invention is the heat pump system according to the fourth aspect, further comprising air-temperature-setting means for setting an air temperature of a target space for which air-warming is to be carried out; and air-temperature-detecting means for detecting the air temperature. In a case where an air temperature differential between a detected air temperature detected by the air-temperature-detecting means and a set air temperature set by the air-temperature-setting means is greater than a predetermined third target temperature differential, the controller changes the second target temperature differential in the direction of a smaller medium temperature differential.

According to the aspect described above, because in a case where an air temperature differential between a detected air temperature detected by the air-temperature-detecting means and a set air temperature set by the air-temperature-setting means is greater than a predetermined third target temperature differential, the second target temperature differential is modified in the direction of a smaller medium temperature differential, flow rate control of the aqueous medium can take place in coordination with room temperature, and excessive temperature rise of the aqueous medium can be more reliably prevented, even in cases of decreased load on the usage-side heat exchanger.

## BRIEF DESCRIPTION OF THE DRAWINGS

FIG. 1 is a circuit diagram of a heat pump system according to an embodiment of the present invention.
FIG. 2 is a flowchart of flow rate control of an aqueous medium by the heat pump system of FIG. 1.
FIG. 3 is a flowchart of coordinated control of room temperature and flow rate of the aqueous medium by the heat pump system of FIG. 1.

## DESCRIPTION OF EMBODIMENTS

Next, an embodiment of the heat pump system of the present invention is described with reference to the drawings.

(Embodiment)

<Overall Configuration>

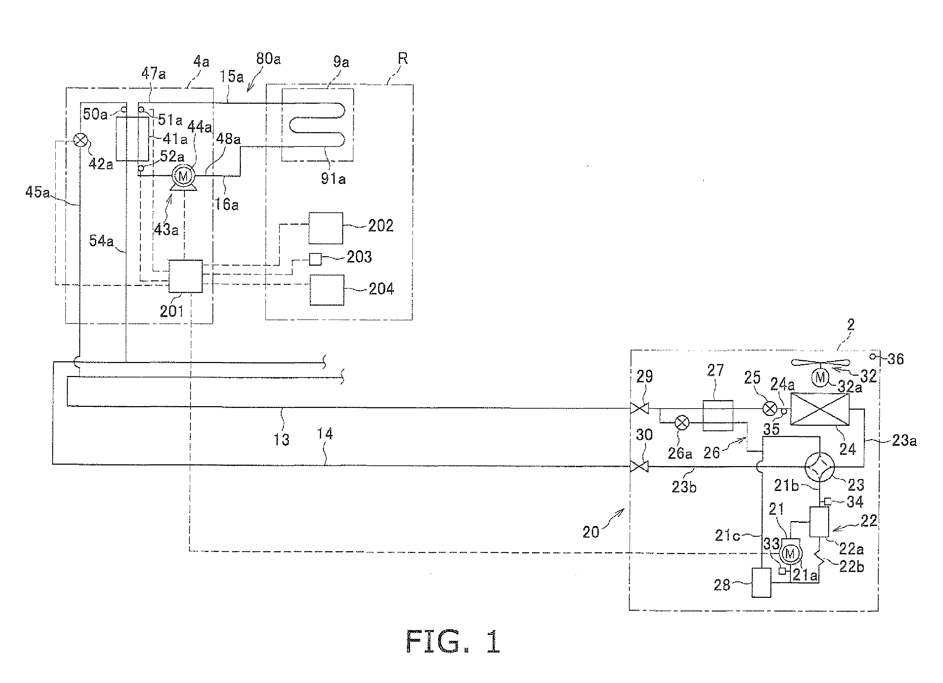

FIG. 1 is a view showing the general configuration of a heat pump system 1 according to an embodiment of the present invention. A heat pump system 1 is a device capable of utilizing a vapor compression type heat pump cycle to carry out an operation to heat an aqueous medium.

The heat pump system I is primarily provided with a heat source unit 2, a usage unit 4a, a liquid refrigerant communication tube 13, a gas refrigerant communication tube 14, a hot-water air-warming unit 9a, an aqueous medium communication tube 15a, and an aqueous medium communication tube 16a. The heat source unit 2 and the usage unit 4a are connected via the refrigerant communication tubes 13, 14, and thereby constitute a heat-source-side refrigerant circuit 20, while the usage unit 4a and the hot-water air-warming unit 9a are connected via the aqueous medium communication tubes 15a, 16a, and thereby constitute an aqueous medium circuit 80a. HFC-410A, which is a type of HFC-based refrigerant, is enclosed in the heat-source-side refrigerant circuit 20 as the heat-source-side refrigerant, while an ester-type or ether-based refrigerant machine oil that is compatible with the HFC-based refrigerant is enclosed in the heat-source-side refrigerant circuit 20 for lubricating a heat-source-side compressor 21 (discussed later). Water is circulated as an aqueous medium through the aqueous medium circuit 80a.

In this heat pump system 1, the heat-source-side compressor 21, a usage-side heat exchanger 41a for carrying out heat exchange between the refrigerant and the aqueous medium, expansion valves 25, 42a, and a heat-source-side heat exchanger 24 are connected in a loop, thereby constituting the single heat-source-side refrigerant circuit 20.

The heat pump system 1 of FIG. 1 is further provided with a room temperature controller 202 furnished to a room R where the hot-water air-warming unit 9a is disposed; an air temperature sensor 203; a hot-water controller 204; and a controller 201 for controlling operation of the heat pump system 1 on the basis of signals from the room temperature controller 202, the air temperature sensor 203, the hot-water controller 204, and various other sensors (an aqueous medium inlet temperature sensor 51a, an aqueous medium outlet temperature sensor 52a, and others).

On the heat source unit 2 side, the controller 201 primarily controls operation of the heat-source-side compressor 21, a heat-source-side expansion valve 25, and the like; and on the usage unit 4a side, controls operation of a usage-side flow rate adjustment valve 42a, a circulating pump 43a, and the like.

The room temperature controller 202 is a controller for setting the room temperature of the room R to a desired temperature, and is furnished to an existing remote control or the like. The room temperature controller 202 transmits a temperature setting signal to the controller 201.

The air temperature sensor 203 detects the room temperature of the room R and transmits a signal indicating the detected room temperature to the controller 201.

The hot-water controller 204 is a controller for measuring the water temperature of hot water supplied to the hot-water air-warming unit 9a, and setting the water to a predetermined temperature setting. The hot-water controller 204 transmits a signal indicating current water temperature and a signal indicating the water temperature setting to the controller 201.

<Heat source unit>

The heat source unit 2 is installed outdoors, and is connected to the usage unit 4a via the refrigerant communication tubes 13, 14 to constitute part of the heat-source-side refrigerant circuit 20.

The heat source unit 2 has primarily a heat-source-side compressor 21, an oil separation mechanism 22, a heat-source-side switching mechanism 23, a heat-source-side heat exchanger 24, a heat-source-side expansion valve 25, an intake return tube 26, a subcooler 27, a heat-source-side accumulator 28, a liquid-side shutoff valve 29 and a gas-side shutoff valve 30.

The heat-source-side compressor 21 is a mechanism for compressing the heat-source-side refrigerant. The heat-source-side compressor 21 used herein is an airtight compressor in which a rotary-type, scroll-type, or other positive-displacement compression element (not shown) housed in a casing (not shown) is driven by a heat-source-side compressor motor 21a which is also housed in the casing. A high-pressure space (not shown) filled by the heat-source-side refrigerant after compression in the compression element is formed inside the casing of the heat-source-side compressor 21, and refrigeration, machine oil is stored in the high-pressure space. The rotation speed (i.e., the operating frequency) of the heat-source-side compressor motor 21 a can be varied by an inverter apparatus (not shown), and the capacity of the heat-source-side compressor 21 can thereby be controlled.

The oil separation mechanism 22 is a mechanism for separating refrigeration machine oil included in the heat-source-side refrigerant that is discharged from the heat-source-side compressor 21 and returning the refrigeration machine oil to the intake of the heat-source-side compressor. The oil separation mechanism 22 has primarily an oil separator 22a provided to a heat-source-side discharge tube 21b of the heat-source-side compressor 21; and an oil return tube 22b for connecting the oil separator 22a and a heat-source-side intake tube 21c of the heat-source-side compressor 21. The oil separator 22a is a device for separating refrigeration machine oil included in the heat-source-side refrigerant that is discharged from the heat-source-side compressor 21. The oil return tube 22b has a capillary tube, and is a refrigerant tube for returning the refrigeration machine oil separated from the heat-source-side refrigerant in the oil separator 22a to the heat-source-side intake tube 21c of the heat-source-side compressor 21.

The heat-source-side switching mechanism 23 is a four-way switching valve capable of switching between a heat-source-side radiating operation state in which the heat-source-side heat exchanger 24 functions as a radiator of the heat-source-side refrigerant, and a heat-source-side evaporating operation state in which the heat-source-side heat exchanger 24 functions as a evaporator of the heat-source-side refrigerant. The heat-source-side switching mechanism 23 is connected to the heat-source-side discharge tube 21b, the heat-source-side intake tube 21c, a first heat-source-side gas refrigerant tube 23a connected to the gas side of the heat-source-side heat exchanger 24, and a second heat-source-sidc gas refrigerant tube 23b connected to the gas-side shutoff valve 30. The heat-source-side switching mechanism 23 is capable of switching for communicating the heat-source-side discharge tube 21b with the first heat-source-side gas refrigerant tube 23a, and communicating the second heat-source-side gas refrigerant tube 23b with the beat-source-side intake tube 21c (this switching corresponding to the heat-source-side radiating operation state, indicated by solid lines in the heat-source-side switching mechanism 23 in FIG. 1). The heat-source-side switching mechanism 23 is also capable of switching for communicating the heat-source-side discharge tube 2 1 b with the second heat-source-side gas refrigerant tube 23h, and communicating the first heat-source-side gas refrigerant tube 23a with the heat-source-side intake tube 21 c (this switching corresponding to the heat-source-side evaporating operation state, indicated by dashed lines in the heat-source-side switching mechanism 23 in FIG. 1). The heat-source-side switching mechanism 23 is not limited to a four-way switching valve, and may configured so as to have a function for switching the same directions of heat-source-side refrigerant flow as those described above, through the use of a combination of a plurality of solenoid valves or the like, for example.

The heat-source-side heat exchanger 24 is a heat exchanger for functioning as a radiator or evaporator of the heat-source-side refrigerant by exchanging heat between the heat-source-side refrigerant and outdoor air. Aheat-source-side liquid refrigerant tube 24a is connected to the liquid side of the heat-source-side heat exchanger 24, and the first heat-source-side gas refrigerant tube 23a is connected to the gas side thereof The outdoor air for heat exchange with the heat-source-side refrigerant in the heat-source-side heat exchanger 24 is fed by a heat-source-side fan 32 which is driven by a heat-source-side fan motor 32a.

The heat-source-side expansion valve 25 is an electrical expansion valve for performing such functions as depressurizing the heat-source-side refrigerant flowing through the heat-source-side heat exchanger 24, and is provided to the heat-source-side liquid refrigerant tube 24a.

The intake return tube 26 is a refrigerant tube for diverting a portion of the heat-source-side refrigerant flowing through the heat-source-side liquid refrigerant tube 24a and returning the diverted refrigerant to the intake of the heat-source-side compressor 21, and in the present embodiment, one end of the intake return tube 26 is connected to the heat-source-side liquid refrigerant tube 24a, and the other end is connected to the heat-source-side intake tube 21c. An intake return expansion valve 26a, the opening degree of which can be controlled, is provided to the intake return tube 26. The intake return expansion valve 26a is composed of an electrical expansion valve.

The subcooler 27 is a heat exchanger for exchanging heat between the heat-source-side refrigerant flowing through the heat-source-side liquid refrigerant tube 24a and the heat-source-side refrigerant flowing through the intake return tube 26 (more specifically, the heat-source-side refrigerant that has been depressurized by the intake return expansion valve 26a).

The heat-source-side accumulator 28 is provided to the heat-source-side intake tube 21c, and is a container for temporarily storing the heat-source-side refrigerant circulated through the heat-source-side refrigerant circuit 20 before the heat-source-side refrigerant is drawn into the heat-source-side compressor 21 from the heat-source-side intake tube 21c.

The liquid-side shutoff valve 29 is a valve provided at the connection between the heat-source-side liquid refrigerant tube 24a and the liquid refrigerant communication tube 13. The gas-side shutoff valve 30 is a valve provided at the connection between the second heat-source-side gas refrigerant tube 23b and the gas refrigerant communication tube 14.

Various sensors are provided to the heat source unit 2. Specifically, the heat source unit 2 is provided with a heat-source-side intake pressure sensor 33 for detecting a heat-source-side intake pressure Ps1, which is the pressure of the heat-source-side refrigerant in the intake of the heat-source-side compressor 21; a heat-source-side discharge pressure sensor 34 for detecting a heat-source-side discharge pressure Pd1, which is the pressure of the heat-source-side refrigerant in the discharge of the heat-source-side compressor 21; a heat-source-side heat exchange temperature sensor 35 for detecting a heat-source-side heat exchanger temperature Thx, which is the temperature of the heat-source-side refrigerant in the liquid side of the heat-source-side heat exchanger 24; and an outdoor air temperature sensor 36 for detecting an outdoor air temperature To.

-Liquid refrigerant communication tube-

The liquid refrigerant communication tube 13 is collected to the heat-source-side liquid refrigerant tube 24a via the liquid-side shutoff valve 29, and the liquid refrigerant communication tube 13 is a refrigerant tube capable of directing the heat-source-side refrigerant to the outside of the heat source unit 2 from the outlet of the heat-source-side heat exchanger 24 which functions as a radiator of the heat-source-side refrigerant when the heat-source-side switching mechanism 23 is in the heat-source-side radiating operation state. The liquid refrigerant communication tube 13 is also a refrigerant tube capable of introducing the heat-source-side refrigerant from outside the heat source unit 2 into the inlet of the heat-source-side heat exchanger 24 which functions as an evaporator of the heat-source-side refrigerant when the heat-source-side switching mechanism 23 is in the heat-source-side evaporating operation state.

-Gas refrigerant communication tube-

The gas refrigerant communication tube 14 is connected to the second heat-source-side gas refrigerant tube 23b via the gas-side shutoff valve 30. The gas refrigerant communication tube 14 is a refrigerant tube capable of introducing the heat-source-side refrigerant into the intake of the heat-source-side compressor 21 from outside the heat source unit 2 when the heat-source-side switching mechanism 23 is in the heat-source-side radiating operation state. The gas refrigerant communication tube 14 is also a refrigerant tube capable of directing the heat-source-side refrigerant to the outside of the heat source unit 2 from the discharge of the heat-source-side compressor 21 when the heat-source-side switching mechanism 23 is in the heat-source-side evaporating operation state.

<Usage unit>

The usage unit 4a is installed indoors, and is connected to the heat source unit 2 via the refrigerant communication tubes 13, 14 to constitute a part of the heat-source-side refrigerant circuit 20. The usage unit 4a is also connected to the hot-water air-warming unit 9a via the aqueous medium communication tubes 15a, 16a, and constitutes a part of the aqueous medium circuit 80a.

The usage unit 4a primarily has the usage-side heat exchanger 41a, the usage-side flow rate adjustment valve 42a, and the circulating pump 43a.

The usage-side heat exchanger 41a is a heat exchanger that functions as a radiator for the heat-source-side refrigerant by carrying out heat exchange between the heat-source-side refrigerant and the aqueous medium. A usage-side liquid refrigerant tube 45a is connected to the liquid side of the flow path along which the heat-source-side refrigerant flows, while a usage-side gas refrigerant tube 54a is connected to the gas side of the flow path along which the heat-source-side refrigerant flows. A usage-side water inlet tube 47a is connected to the inlet side of the flow path along which the aqueous medium flows, and a usage-side water outlet tube 48a is connected to the outlet side of the flow path along which the aqueous medium flows. The liquid refrigerant communication tube 13 is connected to the usage-side liquid refrigerant tube 45a, the gas refrigerant communication tube 14 is connected to the usage-side gas refrigerant tube 54a, the aqueous medium communication tube 15a is connected to the usage-side water inlet tube 47a, and the aqueous medium communication tube 16a is connected to the usage-side water outlet tube 48a.

The usage-side flow rate adjustment valve 42a is an electrical expansion valve whereby the flow rate of heat-source-side refrigerant flowing through the usage-side heat exchanger 41a can be varied by controlling the opening degree of the usage-side flow rate adjustment valve 42a, and the usage-side flow rate adjustment valve 42a is provided to the usage-side liquid refrigerant tube 45a.

The circulation pump 43a is a mechanism for pressurizing the aqueous medium, and the circulation pump 43a used herein is a pump in which a centrifugal and/or positive-displacement pump element (not shown) is driven by a circulation pump motor 44a. The circulation pump 43a is provided to the usage-side water outlet tube 48a. The rotation speed (i.e., the operating frequency) of the circulation pump motor 44a can be varied by an inverter apparatus (not shown), and the capacity of the circulation pump 43a can thereby be controlled.

The usage unit 4a is thereby configured so that a hot-water supply operation can be performed in which the usage-side heat exchanger 41a is caused to function as a radiator of the heat-source-side refrigerant introduced from the gas refrigerant communication tube 14, whereby the heat-source-side refrigerant radiated in the usage-side heat exchanger 41a is directed to the liquid refrigerant communication tube 13, and the aqueous medium is heated by radiation of the heat-source-side refrigerant in the usage-side heat exchanger 41a.

Various sensors are provided to the usage unit 4a. Specifically, the usage unit 4a is provided with a usage-side heat exchange temperature sensor 50a for detecting a usage-side refrigerant temperature Tsc1 which is the temperature of the heat-source-side refrigerant in the liquid side of the usage-side heat exchanger 41a; an aqueous medium inlet temperature sensor 51a for detecting an aqueous medium inlet temperature Twr, which is the temperature of the aqueous medium in the inlet of the usage-side heat exchanger 41a; and an aqueous medium outlet temperature sensor 52a for detecting an aqueous medium outlet temperature Tw1 which is the temperature of the aqueous medium in the outlet of the usage-side heat exchanger 41a.

-hot-water air-warming unit-

The hot-water air-warming unit 9a is installed indoors, is connected to the first usage unit 4a via the aqueous medium communication tubes 15a, 16a, and constitutes a portion of the aqueous medium circuit 80a.

The hot-water air-warming unit 9a has primarily a heat exchange panel 91a, and is composed of a radiator and/or a floor heating panel and other components.

The heat exchange panel 91a is provided alongside a wall or elsewhere indoors when configured as a radiator, and is provided under the floor or elsewhere indoors when configured as a floor heating panel. The heat exchange panel 91a is a heat exchanger for functioning as a radiator or heater of the aqueous medium circulated through the aqueous medium circuit 80a, and the aqueous medium communication tube 16a is connected to the inlet of the heat exchange panel 91a, and the aqueous medium communication tube 15a is connected to the outlet of the heat exchange panel 91a.

<Aqueous medium communication tubes>

The aqueous medium communication tube 15a is connected to the outlet of a heat exchange panel 91a of the hot-water air-warming unit 9a. The aqueous medium communication tube 16a is connected to the inlet of the heat exchange panel 131a of the hot-water air-warming unit 9a.

It is also possible for a hot-water storage unit to be connected to the aqueous medium communication tubes 15a, 16a, in parallel with the hot-water air-warming unit 9a.

<Hot-water air-warming operation>

Next, the hot-water air-warming operation of the heat pump system 1 is described.

In a case where the hot-water air-warming operation of the usage unit 4a is to be carried out, in the heat-source-side refrigerant circuit 20, a heat-source-side switching mechanism 23 switches to an evaporation operation state (the state of the heat-source-side switching mechanism 23 depicted by broken lines in FIG. 1), and an intake return expansion valve 26a goes to a closed state.

In such a state, in the heat-source-side refrigerant circuit 20, the heat-source-side refrigerant, currently at low pressure in the refrigeration cycle, is drawn into the heat-source-side compressor 21 through a heat-source-side intake tube 21c, where it is compressed to high pressure in the refrigeration cycle, and thereafter discharged to a heat-source-side discharge tube 21b. The high-pressure heat-source-side refrigerant which has been discharged into the heat-source-side discharge tube 21b undergoes separation of the refrigerant machine oil in an oil separator 22a. The refrigerant machine oil that was separated from the heat-source-side refrigerant in the oil separator 22a is returned to the heat-source-side intake tube 21c through an oil return tube 22b. Through the second heat-source-side gas refrigerant tube 23b and the gas-side shutoff valve 30, the high-pressure heat-source-side refrigerant from which the refrigerant machine oil was separated is fed from the heat source unit 2 to the refrigerant communication tube 14.

The high-pressure heat-source-side refrigerant fed to the refrigerant communication tube 14 is then fed to the usage unit 4a. The high-pressure heat-source-side refrigerant fed to the usage unit 4a is then fed to the usage-side heat exchanger 41a. In the usage-side heat exchanger 41a, the high-pressure heat-source-side refrigerant fed to the usage-side heat exchanger 41a radiates heat through heat exchange with the aqueous medium circulated through the aqueous medium circuit 80a by the circulating pump 43a. Through the usage-side flow rate adjustment valve 42a and the usage-side liquid refrigerant tube 45a, the high-pressure heat-source-side refrigerant that has radiated its heat in the usage-side heat exchanger 41a is fed from the usage unit 4a to the liquid refrigerant communication tube 13.

The heat-source-side refrigerant fed to the liquid refrigerant communication tube 13 is fed to the heat source unit 2. The heat-source-side refrigerant fed to the heat source unit 2 is fed to a subcooler 27 through the liquid-side shutoff valve 29. Because the heat-source-side refrigerant is not flowing in the intake return tube 26, the heat-source-side refrigerant fed to the subcooler 27 is fed to the heat-source-side expansion valve 25, without having undergone heat exchange. The heat-source-side refrigerant fed to the heat-source-side expansion valve 25 is depressurized in the heat-source-side expansion valve 25 and assumes a low-pressure, gas-liquid two-phase state, and is fed to the heat-source-side heat exchanger 24 through the heat-source-side liquid refrigerant tube 24a. In the heat-source-side heat exchanger 24, the low-pressure refrigerant fed to the heat-source-side heat exchanger 24 undergoes heat exchange with outdoor air supplied by a heat-source-side fan 32 and evaporates. The low-pressure heat-source-side refrigerant having evaporated in the heat-source-side heat exchanger 24 is fed to a heat-source-side accumulator 28 through a first heat-source-side gas refrigerant tube 23a and the heat-source-side switching mechanism 23. The low-pressure heat-source-side refrigerant fed to the heat-source-side accumulator 28 is again drawn into the heat-source-side compressor 21 through the heat-source-side intake tube 21c.

Meanwhile, in the aqueous medium circuit 80a, the aqueous medium circulating through the aqueous medium circuit 80a is heated by heat radiated from the heat-source-side refrigerant in the usage-side heat exchanger 41a. The aqueous medium heated in the usage-side heat exchanger 41a is drawn into the circulating pump 43a through the usage-side water outlet tube 48a; and, after being pressurized, is fed from the usage unit 4a to the aqueous medium communication tube 16a. The aqueous medium fed to the aqueous medium communication tube 16a is fed to the hot-water air-warming unit 9a.

The aqueous medium fed to the hot-water air-warming unit 9a radiates heat in the heat exchange panel 91a, and thereby heats indoor walls and the like, or indoor floors.

<Flow rate control of aqueous medium circulating in aqueous medium circuit>

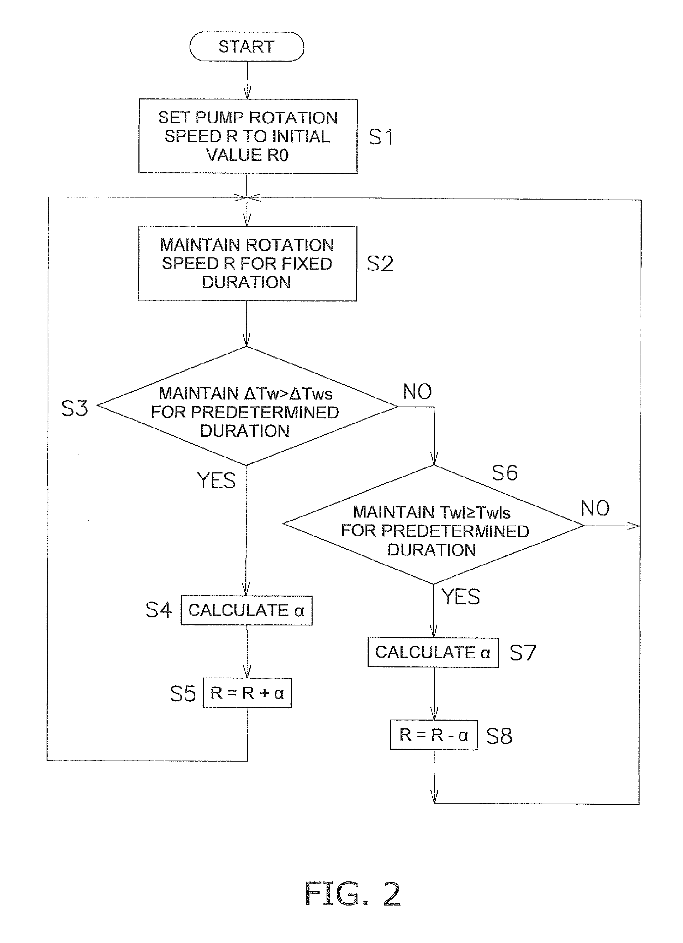

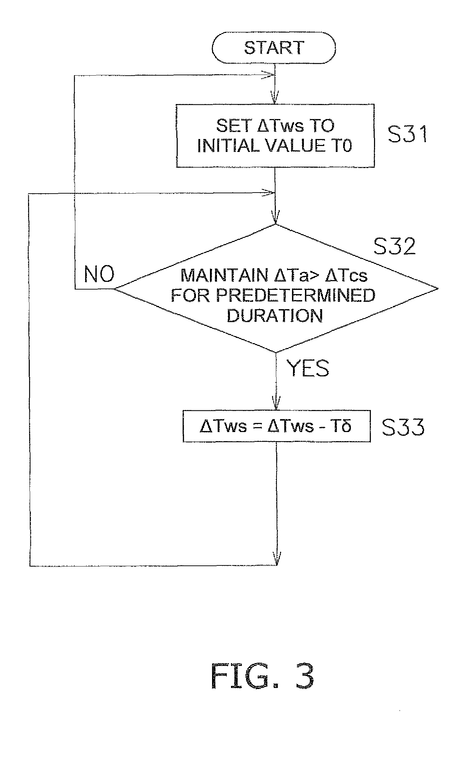

Flow rate control of the aqueous medium circulating through the aqueous medium circuit 80a in the above-described hot-water air-warming operation will be described referring to the flowcharts of FIGS. 2 and 3.

In the heat pump system 1 of the present embodiment, first, the controller 201 changes the operating frequency of the compressor 21 to control the refrigerant circulation rate such that the aqueous medium outlet temperature Tw1 at the outlet of the usage-side heat exchanger 41 a reaches a targeted first target temperature Tw1s, Control of the refrigerant circulation rate is carried out in parallel even during the following flow rate control of the aqueous medium.

In association therewith, the controller 201 controls the operating capacity of the circulating pump 43a to bring an outlet/inlet temperature differential $\Delta Tw$ (= Twl - Twr) of the aqueous medium between the outlet and the inlet of the usage-side heat exchanger 41a to a target aqueous medium outlet/inlet temperature differential $\Delta Tws$ which is a targeted second target temperature differential.

Specifically, in Step S1 of FIG. 2, first, the rotating speed R (i.e., the operating frequency) of the circulating pump motor 44a is set to an initial value R0.

Next, in Step S2, while the rotating speed R of the circulating pump motor 44a is kept at R0 the controller 201 controls the circulating pump 43a to operate for a fixed duration.

Next, in Step S3, the controller 201 assesses whether the outlet/inlet temperature differential $\Delta Tw$ of the aqueous medium at the outlet and the inlet of the usage-side heat exchanger 41a is greater than the target aqueous medium outlet/inlet temperature differential $\Delta Tws$.

In a case where a state in which the aqueous medium outlet/inlet temperature differential $\Delta Tw$ is greater than the target aqueous medium outlet/inlet temperature differential $\Delta Tws$ is maintained for a predetermined duration (YES in Step S3), the flow rate of the aqueous medium circulating through the aqueous medium circuit 80a is assessed as being low, and a control is carried out to increase the operating capacity of the circulating pump 43a by increasing the rotating speed (specifically, the operating frequency) of the circulating pump motor 44a (Steps S4-5). In the present embodiment, the controller 201 controls the operating capacity of the circulating pump 43a by carrying out PI control to bring the outlet/inlet temperature differential $\Delta Tw$ at the current point in time into approximation with the target aqueous medium outlet/inlet temperature differential $\Delta Tws$.

Here, PI control refers to so-called proportional-integral control, the input-output relationship of which is typically depicted by Expression (1) below.

$$u(t) = kp\{e(t) + (1/Ti) \int e(t)dt\} \quad \text{Expression (1)}$$

Here,

  u(t): a function of a manipulated variable with respect to time t
  kp: proportional gain
  e(t): a function of deviation with respect to time t
  Ti: integration time

An advantage of PI control is that deviation (error) does not arise even if there are modifications of the target value or steady disturbances.

Based on the aforedescribed basic expression (1) of PI control, PI control is carried out to bring deviation EF ($=\Delta Tws - \Delta Tw$) between the target temperature differential $\Delta Tws$ and the usage-side heat exchanger outlet/inlet temperature differential $\Delta Tw$ to zero. In this case, a value $\alpha$ which is a correction value for the rotation speed R of the circulating pump motor 44 is given by the following Expression (2).

$$\alpha = \alpha\# + Kc \times \{(EF - EF\#) + Kic \times (EF + EF\#)\Delta tc/2Tic\} \quad \text{Expression (2)}$$

  $\alpha\#$: previous $\alpha$
  EF: current deviation
  EF#: previous deviation
  Kc, Kic: gain
  $\Delta tc$: sampling time
  Tic: integration constant

Specifically, in Step S4, the controller 201 calculates $\alpha$ on the basis of the above Expression (2).

Next, in Step S5, the controller 201 corrects the rotating speed R of the circulating pump motor 44a to a rotating speed equal to the current rotating speed plus $\alpha$, and controls the operating capacity of the circulating pump 43a. Thereafter, the process flow returns to Step S2.

On the other hand, in a case where the aqueous medium outlet/inlet temperature differential $\Delta Tw$ is less than

the target aqueous medium outlet/inlet temperature differential ΔTws (NO in Step S3), and the aqueous medium outlet temperature Twl is equal to or greater than the targeted first target temperature Twls (YES in Step S6), the flow rate of the aqueous medium circulating through the aqueous medium circuit 80a is assessed as being high, and PI control analogous to that discussed above is carried out to decrease the operating capacity of the circulating pump 43a by decreasing the rotating speed (specifically, the operating frequency) of the circulating pump motor 44a (Steps S7-8).

Specifically, in Step S7, the controller 201 calculates $\alpha$ on the basis of the above Expression (2).

Next, in Step S8, the controller 201 corrects the rotating speed R of the circulating pump motor 44a to a rotating speed equal to the current rotating speed minus $\alpha$, and controls the operating capacity of the circulating pump 43a. Thereafter, the process flow returns to Step S2.

Through flow rate control of the aqueous medium in the above manner, it is possible to appropriately control the flow rate of the aqueous medium circulating through the aqueous medium circuit 80a. The target aqueous medium outlet/inlet temperature differential ΔTws is set with consideration to the design parameter for heat exchange capability of the usage-side heat exchanger 41 a, and the like.

(Coordinated control of room temperature and flow rate of aqueous medium)

In a case where an air temperature differential ΔTa (=Ts-Td) between a detected air temperature Td, which is the room temperature inside the room R detected by the air temperature sensor 203, and a set air temperature Ts that has been set by the room temperature controller 202, is greater than a predetermined third target temperature differential ΔTcs, the controller 201 carries out control to change the target aqueous medium outlet/inlet temperature differential ΔTws in the direction of a smaller aqueous medium outlet/inlet temperature differential ΔTw.

Specifically, as depicted in the flowchart of FIG. 3, first, in Step S31, the controller 201 sets the target aqueous medium outlet/inlet temperature differential ΔTws to an initial value T0.

Next, in Step S32, the controller 201 assesses whether the air temperature differential ΔTa between the detected air temperature Td and the set air temperature Ts that has been set by the room temperature controller 202 is greater than the predetermined third target temperature differential ΔTcs.

In a case where a state in which ΔTa is greater than ΔTcs is maintained for a predetermined duration (YES in Step S32), in Step S33, the controller 201 performs operation control in the direction of a smaller aqueous medium outlet/inlet temperature differential ΔTw by setting a new target aqueous medium outlet/inlet temperature differential ΔTws that is equal to the previous target aqueous medium outlet/inlet temperature differential ΔTws minus a predetermined correction value Tδ, and more specifically, controls the operating capacity of the circulating pump 43a in the direction of an increased circulation rate of the aqueous medium.

On the other hand, in a case where a state in which ΔTa is greater than ΔTcs is not maintained for a predetermined duration (NO in Step S32), the target aqueous medium outlet/inlet temperature differential ΔTws is set to the initial value T0.

Through flow rate control of the aqueous medium in coordination with room temperature in this way, even if there has been a decrease in load on the hot-water air-warming unit 9a or other air-warming heat exchanger, excessive temperature rise of the aqueous medium can be reliably prevented.

(Features of the present embodiment)

(1)
In the heat pump system 1 of the present embodiment, two controls are carried out in parallel. As a first control, the refrigerant-side circulation rate in the heat-source-side refrigerant circuit 20 is controlled such that the temperature Twl of the aqueous medium at the outlet of the usage-side heat exchanger 4 1 a is brought to the targeted first target temperature Twls, controlling the water temperature at the outlet side of the usage-side heat exchanger 41 a so as to maintain it at a predetermined temperature. In association therewith, as a second control, the operating capacity of the circulating pump 43a is controlled such that the medium temperature differential ΔTw of the aqueous medium at the outlet and the inlet of the usage-side heat exchanger 41a is brought to a targeted second target temperature differential ΔTws, automatically controlling the temperature differential between the outlet and the inlet, which in a conventional heat pump system is fixed by manual adjustment during installation and the like, to a predetermined temperature differential. Because of this, even if there is a decline in the load on the usage-side heat exchanger 41a, excessive temperature fluctuations of the aqueous medium can be reliably prevented.

(2)
Consequently, even if there is a decline in the load on the usage side, through PI control whereby the medium temperature differential ΔTw, which is the temperature differential between the outlet and the inlet of the usage-side heat exchanger 41a, is increased towards the second target temperature differential $\Delta$Tws, the temperature can be prevented from rising above the design temperature of intermediate hot-water equipment of usage-side machinery such as the hot-water air-warming unit 9a, and overheating or auto-shutoff of machinery can be prevented. As a result, energy efficiency can be improved, and comfort can be improved as well. Further, because water flow adjustment of the circulating pump 43a is carried out automatically, management and adjustment of the hot-water flow rate is easy.

(3)

Also, in the heat pump system 1 of the present embodiment, the controller 201 controls the operating capacity of the circulating pump 43a by carrying out PI control so as to bring the outlet/inlet temperature differential $\Delta$Tw at the current point in time into approximation with the target aqueous medium outlet/inlet temperature differential $\Delta$Tws. Consequently, in the heat pump system 1 of the present embodiment, through PI control as described above, temperature control can take place such that deviation between the outlet/inlet temperature differential $\Delta$Tw at the current point in time and the target aqueous medium outlet/inlet temperature differential $\Delta$Tws is eliminated, whereby excessive temperature rise of the aqueous medium can be reliably prevented.

(4)

Further, in the heat pump system 1 of the present embodiment, air-warming of the room R is carried out using hot water produced by condensing the refrigerant in the usage-side heat exchanger 41a. Because of this, even if the load on the usage-side heat exchanger 41a has decreased due to a rise in room temperature of the room R, excessive temperature rise of the aqueous medium can be reliably prevented.

(5)

In the heat pump system 1 of the present embodiment, in a case where the outlet/inlet temperature differential $\Delta$Tw is less than the target aqueous medium outlet/inlet temperature differential $\Delta$Tws, and the temperature Twl of the aqueous medium at the outlet of the usage-side heat exchanger 41a is equal to or greater than the targeted first target temperature Twls, the controller 201 carries out control to decrease the operating capacity of the circulating pump 43a; or if the outlet/inlet temperature differential $\Delta$Tw is greater than the target aqueous medium outlet/inlet temperature differential $\Delta$Tws, carries out control to increase the operating capacity of the circulating pump 43a.

Therefore, in a case where the outlet/inlet temperature differential $\Delta$Tw is less than the target aqueous medium outlet/inlet temperature differential $\Delta$Tws, and the temperature Twl of the aqueous medium at the outlet of the usage-side heat exchanger 41a is equal to or greater than the targeted first target temperature Twls, it can be decided that the load on the usage-side heat exchanger 41a has decreased, and excessive temperature rise of the aqueous medium can be more reliably prevented.

(6)

In the heat pump system 1 of the present embodiment, in a case where the differential $\Delta$Ta (=Ts-Td) between the detected air temperature Td detected by the air temperature sensor 203, and the set air temperature Ts set by the room temperature controller 202, is greater than the predetermined third target temperature differential $\Delta$Tcs, the controller 201 changes the target aqueous medium outlet/inlet temperature differential $\Delta$Tws in the direction of a smaller outlet/inlet temperature differential $\Delta$Tw.

Through flow rate control of the aqueous medium in coordination with room temperature, when the load on the usage-side heat exchanger 41a has decreased due to the room temperature becoming sufficiently higher than the set temperature, control is thus carried out to change the target aqueous medium outlet/inlet temperature differential $\Delta$Tws in the direction of a smaller outlet/inlet temperature differential $\Delta$Tw, increasing the operating capacity of the circulating pump 43a, whereby excessive temperature rise of the aqueous medium can be more reliably prevented. Consequently, in a case where, e.g., the capability is insufficient during warming up of the heat pump system 1, by automatically modifying the target aqueous medium outlet/inlet temperature differential $\Delta$Tws, it is possible to modify the operating capacity of the circulating pump 43a. Consequently, the need to modify the set air temperature Ts using the room temperature controller 202 is eliminated.

(Modified Examples)

(A)

In the aforedescribed embodiment, in order to aid in understanding of the invention, an example of a single usage unit 4a furnished on the usage side was depicted as one example of the heat pump system 1 of the present invention, but the present invention is not limited thereto, and it is possible for another usage unit (an indoor air conditioning unit or the like) to be connected in parallel with the usage unit 4a to the liquid refrigerant communication tube 13 and the gas refrigerant communication tube 14. In this case as well, by carrying out the operation control of the aforedescribed embodiment, excessive temperature rise of the aqueous medium can be reliably prevented, even in a case of a decrease in load on the usage-side heat exchanger 41 a.

(B)

Further, in the heat pump system I of the aforedescribed embodiment, the usage unit 4a is one in which direct heat exchange is carried out between the refrigerant of the heat-source-side refrigerant circuit 20 and the water of the aqueous medium circuit 80a by the usage-side heat exchanger 41 a; however, the present invention is not limited thereto, and may instead be configured as a cascade-type heat pump system with a separate refrigerant circuit intervening between the heat-source-side refrigerant circuit 20 and the aqueous medium circuit 80a. In this case as well, by carrying out the operation control of the aforedescribed embodiment, excessive temperature rise of the aqueous medium can be reliably prevented, even in a case of a decrease in load on the usage-side heat exchanger 41a.

(C)

Also, in the heat pump system 1 of the aforedescribed embodiment, a heat pump system for carrying out hot-water floor air-warming was described by way of example, but the present invention is not limited thereto. Specifically, the heat-source-side switching mechanism 23 in the heat pump system 1 may be switched to reverse the flow of the refrigerant in the heat-source-side refrigerant circuit 20, and air-cooling of the room R may be carried out using the cold water generated by evaporation of the refrigerant in the usage-side heat exchanger 41 a. In this case, by carrying out the aforedescribed operation control, excessive temperature drop of the aqueous medium can be reliably prevented, even in a case of a decrease in load on the usage-side heat exchanger 41a.

## INDUSTRIAL APPLICABILITY

Various applications of the present invention in heat pump systems for circulating aqueous medina are possible.

## REFERENCE SIGNS LIST

| | |
|---|---|
| 1 | Heat pump system |
| 2 | Heat source unit |
| 4a | Usage unit |
| 12 | Discharge refrigerant communication tube |
| 13 | Liquid refrigerant communication tube |
| 14 | Gas refrigerant communication tube |
| 20 | Heat-source-side refrigerant circuit |
| 21 | Heat-source-side compressor |
| 23 | Heat-source-side switching mechanism |
| 24 | Heat-source-side heat exchanger |
| 41a | Usage-side heat exchanger |
| 42a | Usage-side flow rate adjustment valve |
| 43a | Circulating pump |
| 80a | Aqueous medium circuit |
| 201 | Controller |
| 202 | Room temperature controller |
| 203 | Air temperature sensor |
| 204 | Hot-water controller |

## CITATION LIST

## PATENT LITERATURE

<Patent Document 1> Japanese Laid-open Patent Application 2003-314838

## Claims

**1.** A heat pump system comprising:

a refrigerant circuit (20) in which a compressor (21), a usage-side heat exchanger (41 a) for carrying out heat exchange between a refrigerant and an aqueous medium, an expansion valve (25, 42a), and a heat-source-side heat exchanger (24) are connected in loop form;

an inlet temperature sensor (51a) for measuring a heat exchanger inlet temperature of the aqueous medium in the usage-side heat exchanger (41a);

an outlet temperature sensor (52a) for measuring a heat exchanger outlet temperature of the aqueous medium in the usage-side heat exchanger (41a);

a variable-capacity circulating pump (43a) for circulating the aqueous medium inside a hot-water circuit of loop form; and

a controller (201) for controlling the refrigerant-side circulation rate in the refrigerant circuit to bring a temperature of the aqueous medium at the outlet of the usage-side heat exchanger (41a) to a targeted first target temperature (Twls), and for controlling operating capacity of the circulating pump (43a) to bring a medium temperature differential ($\Delta$Tw) of the aqueous medium between the outlet and the inlet of the usage-side heat exchanger (41a) to a targeted second target temperature differential ($\Delta$Tws).

2. The heat pump system, as recited in claim 1, wherein
the controller (201) controls the operating capacity of the circulating pump (43a) by carrying out PI control such that the medium temperature differential ($\Delta$Tw) at a current point in time is brought into approximation with the second target temperature differential ($\Delta$Tws).

3. The heat pump system as recited in claim 1 or 2, wherein
air-warming of a target space is carried out using hot water produced by condensing the refrigerant in the usage-side heat exchanger (41a).

4. The heat pump system as recited in claim 3, wherein
the controller (201) carries out a control to decrease the operating capacity of the pump in a case where the medium temperature differential ($\Delta$Tw) is smaller than the second target temperature differential ($\Delta$Tws) and the temperature of the aqueous medium at the outlet of the usage-side heat exchanger (41a) is equal to or greater than the first target temperature (Twls), and carries out a control to increase the operating capacity of the circulating pump (43a) in a case where the medium temperature differential ($\Delta$Tw) is greater than the second target temperature differential ($\Delta$Tws).

5. The heat pump system as recited in claim 4, further comprising;
air-temperature-setting means (202) for setting an air temperature of a target space for which air-warming is to be carried out; and
air-temperature-detecting means (203) for detecting the air temperature; wherein
in a case where an air temperature differential ($\Delta$Ta) between a detected air temperature detected by the air-temperature-detecting means (203) and a set air temperature set by the air-temperature-setting means (202) is greater than a predetermined third target temperature differential ($\Delta$Tcs), the controller (201) changes the second target temperature differential ($\Delta$Tws) in the direction of a smaller medium temperature differential ($\Delta$Tw).

FIG. 1

START

SET PUMP ROTATION
SPEED R TO INITIAL
VALUE R0    S1

MAINTAIN ROTATION
SPEED R FOR FIXED
DURATION    S2

S3    MAINTAIN $\Delta Tw > \Delta Tws$
FOR PREDETERMINED
DURATION    NO

YES

S6

MAINTAIN $Twl \geq Twls$
FOR PREDETERMINED
DURATION    NO

S4    CALCULATE $\alpha$

YES

CALCULATE $\alpha$    S7

S5    R = R + $\alpha$

R = R - $\alpha$    S8

FIG. 2

START

SET ΔTws TO
INITIAL VALUE T0     S31

S32

NO     MAINTAIN ΔTa> ΔTcs
FOR PREDETERMINED
DURATION

YES

ΔTws = ΔTws - Tδ    S33

FIG. 3

<div align="center">

**INTERNATIONAL SEARCH REPORT**

</div>

| | International application No. |
|---|---|
| | PCT/JP2010/001185 |

**A. CLASSIFICATION OF SUBJECT MATTER**
*F24D3/00*(2006.01)i, *F24D7/00*(2006.01)i, *F24D17/00*(2006.01)i, *F24F11/02*
(2006.01)i, *F25B1/00*(2006.01)i

According to International Patent Classification (IPC) or to both national classification and IPC

**B. FIELDS SEARCHED**

Minimum documentation searched (classification system followed by classification symbols)
F24D3/00, F24D7/00, F24D17/00, F24F11/02, F25B1/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2000-65398 A (Matsushita Electric<br>Industrial Co., Ltd.),<br>03 March 2000 (03.03.2000),<br>paragraphs [0022] to [0042]; fig. 1, 2<br>(Family: none) | 1-3<br>4,5 |
| Y<br>A | JP 2008-209075 A (Mitsubishi Heavy<br>Industries, Ltd.),<br>11 September 2008 (11.09.2008),<br>claim 1; paragraph [0025]; fig. 1, 2<br>(Family: none) | 1-3<br>4,5 |
| A | JP 2005-241088 A (Corona Corp.),<br>08 September 2005 (08.09.2005),<br>claim 1; paragraph [0026]<br>(Family: none) | 1-5 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 March, 2010 (10.03.10) | Date of mailing of the international search report<br>23 March, 2010 (23.03.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**EP 2 402 662 A1**

<table>
<tr><td colspan="2">INTERNATIONAL SEARCH REPORT</td><td>International application No.<br>PCT/JP2010/001185</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 7-269964 A  (Toshiba Corp.),<br>20 October 1995 (20.10.1995),<br>entire text; all drawings<br>& EP 675331 A3          & EP 675331 A2<br>& KR 10-0157693 B        & CN 1117568 A | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003314838 A